# FASCICULE DE BREVET EUROPEEN

(11) **EP 0 452 669 B1**
(45) Date de publication et mention de la délivrance du brevet: **21.02.1996**
(21) Numéro de dépôt: 91103677.0
(22) Date de dépôt: 11.03.1991
(51) Int. Cl.: H01S 3/06, G02B 6/16, H04B 10/12

(54) **Amplificateur optique à fibre dopée à l'erbium**
Erbium-dotierter optischer Faserverstärker
Erbium doped fiber optical amplifier

(30) Priorité: 16.03.1990 FR 9003399
(43) Date de publication de la demande: 23.10.1991
(73) Titulaire: ALCATEL N.V., NL-1077 XX Amsterdam (NL)
(72) Inventeur: Marcerou, Jean-François, F-91080 Courcouronnes (FR); Fevrier, Hervé, F-91300 Massy (FR); Auge, Jacques, F-91530 Saint Cheron (FR)
(74) Mandataire: Weinmiller, Jürgen

(56) Documents cités:
- EP-A- 0 313 209
- EP-A- 0 430 515
- EP-A- 0 437 935
- JOURNAL OF LIGHTWAVE TECHNOLOGY, vol. 8, no. 11, novembre 1990, pages 1730- 1741; E. DESURVIVRE et al.: "Design optimization for efficient erbium-doped fiber amplifiers"
- IEEE PHOTONICS TECHNOLOGY LETTERS, vol. 1, no. 12, décembre 1989, pages 428- 430; J.L. ZYSKIND et al.: "Optimal pump wavelenght in the 4I15/2-4I13/2 absorption band for efficient Er3+-doped fiber amplifiers"
- ELECTRONICS LETTERS, vol. 23, no. 16, 30 juillet 1987, pages 865-866; C.A. MILLER et al.: "Low-threshold CW operation of an erbium-doped fiber laser pumped at 807 nm wavelenght"
- APPLIED OPTICS, vol. 27, no. 23, décembre 1988, pages 4831-4836; J.R. ARMITAGE: "Three-level fiber laser amplifier: a theoretical model"
- OPTICS LETTERS, vol. 14, no. 22, novembre 1989, pages 1266-1268; E. DESURVIRE et al.: "Efficient erbium-doped fiber amplifier at a 1.53-mum wavelenght with a high output saturation power"
- ELECTRONICS LETTERS, vol. 25, no. 20, 28 septembre 1989, pages 1386-1388; R.S. VODHANEL et al.: "Highly efficient 978 nm diode-pumped erbium-doped fibre amplifier with 24dB gain"

## Description

La présente invention concerne un amplificateur optique à fibre dopée à l'erbium, trouvant notamment une application dans les systèmes de télécommunications sous-marines à fibres optiques.

La particularité des amplificateurs à fibre optique dopée à l'erbium réside dans l'obtention de gains élevés par simple passage du signal, dans le domaine spectral 1,5 - 1,6µm, pour des puissances optiques de pompage réduites, de l'ordre de 1 à 150 mW.

La stabilité du processus d'amplification dans une fibre est entre autres liée aux bruits modaux de la pompe optique. Il est donc préférable que l'amplificateur fonctionne suivant un schéma de principe dans lequel la pompe optique et le signal à amplifier sont monomodes, la longueur d'onde de coupure du mode LP₁₁ de la fibre amplificatrice étant ainsi inférieure à la longueur d'onde de la pompe. Cela restreint les longueurs d'ondes de pompage aux deux domaines spectraux 0,98±0,04µm et 1,48±0,04µm.

Une analyse de l'efficacité des processus régissant les amplificateurs peut être conduite en analysant le coefficient de gain g obtenu par le rapport entre le gain net G, exprimé en dB, de la fibre amplificatrice et la puissance optique de pompage, exprimée en mW. Ce coefficient s'exprime ainsi en dB/mW.

Les amplificateurs optiques connus pour avoir les meilleures performances sont décrits dans les deux articles suivants :
[1] J.L. ZYSKIND, J.R.SIMPSON, C.R.GILES and E.DESURVIRE, SPIE, vol. 1171 "Files Laser Sources and Amplifiers", pages 137-145, Conférence SPIE, Boston (USA), Septembre 1989.
[2] M. SHIMIZU, M. HORIGUCHI, M.YAMADA, I. MISHI, S. UEHARA, J. NODA, E. SUGITA, Post-deadline paper n° 17, OFC Conférence, San Francisco (USA), January 1990.

Le premier divulgue un coefficient de gain g de 2,6 dB/mW pour une puissance de pompe de 10mW située dans le domaine spectral de 1,48µm ; la fibre correspondante présente un rayon de mode wₒ à la longueur d'onde de 1,55µm égal à 2,71µm.

Le second indique un coefficient de gain g de 4,9 dB/mW pour une puissance de pompe de 5mW située dans le domaine spectral de 0,98µm ; la fibre présente un rayon de mode wₒ à la longueur d'onde de 1,55µm égal à 2,99 µm. Aucun de ces deux articles ne précise la distribution radiale de l'erbium dans la fibre.

La présente invention a pour but de réaliser des amplificateurs optiques dont les fibres amplificatrices présentent des performances, et donc des coefficients de gain, supérieurs à ceux actuellement connus. Pour y parvenir, la présente invention propose une optimisation des paramètres de la fibre et une optimisation de la localisation radiale de l'erbium.

La présente invention a pour objet un amplificateur optique à fibre dopée à l'erbium destiné à amplifier des signaux de longueur d'onde comprise entre 1,5 µm et 1,6 µm, et associé à une pompe optique, caractérisé par le fait que :
- ladite fibre présente un rayon de mode inférieur ou égal à 2,7 µm à la longueur d'onde de 1,55 µm,
- l'écart d'indice Δn entre le coeur et la gaine de la fibre est compris entre 25x10⁻³ et 35x10⁻³,
- l'erbium est localisé dans le coeur de ladite fibre de façon que sa distribution radiale soit centrée sur l'axe de révolution de cette fibre avec une largeur à mi-hauteur de ladite distribution inférieure au tiers du rayon de coeur,
- la longueur d'onde de pompe est située dans les domaines spectraux de 0,98 ± 0,04 µm ou de 1,48 ± 0,04 µm,
- le coefficient de gain g, égal au rapport entre le gain net G (mesuré en dB) et la puissance de pompe (mesurée en mW), est supérieur à 5 dB/mW.

De manière étonnante, alors qu'on pouvait s'attendre à une dégradation du rapport signal à bruit due à la réduction du rayon de mode, on constate qu'un amplificateur selon l'invention présente un coefficient de gain g pouvant atteindre des valeurs supérieures à 5 dB/mW sans dégradation notable de ce rapport signal à bruit.

Le coefficient de gain g de ladite fibre est amélioré par une diminution du seuil de puissance de pompe nécessaire pour avoir un gain de 0 dB sur une longueur optimale de la fibre amplificatrice. En effet, ce coefficient est d'autant plus important que l'on obtient des gains élevés pour de faibles puissances de pompe. Or, ce seuil est amélioré par une augmentation de la densité de puissance optique de la pompe, donc par une réduction du rayon de mode à la longueur d'onde de pompe et aussi à la longueur d'onde signal.

Des auteurs tels que J.R. ARMITAGE dans un article paru dans "Applied Optics, 27, 1988 pages 4831 à 4836" qui ont déjà essayé d'optimiser les paramètres de la fibre de l'amplificateur n'ont pas mis en évidence le rôle primordial du rayon de mode wₒ.

Selon un mode de réalisation préférentiel, le rayon de coeur R de la fibre est compris entre 1,2 µm et 1,6 µm ; il est par exemple égal à 1,5 µm.

L'écart d'indice Δn entre le coeur et la gaine de la fibre est par exemple égal à 30x10⁻³.

D'autres caractéristiques et avantages de la présente invention apparaîtront au cours de la description suivante de modes de réalisation donnés à titre illustratif mais nullement limitatif.

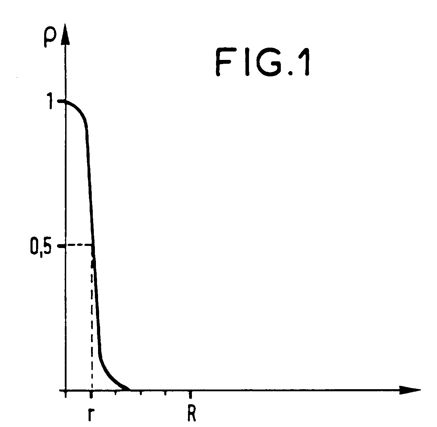

Dans le dessin annexé, la figure unique montre la distribution radiale ρ de l'erbium dans un exemple de fibre selon l'invention.

On étudie deux amplificateurs à fibre : la fibre n° 1 est une fibre selon l'invention et la fibre n° 2 est une fibre ne faisant pas partie de l'invention.

On a reporté dans le tableau I leur longueur optimale L (mètres), la valeur de leur écart d'indice Δn, leur rayon de coeur R (µm), leur rayon de mode wₒ (µm), leur gain G (dB) et leur coefficient de gain g (dB/mW).

On prévoit une distribution radiale non uniforme de l'erbium dans la fibre n° 1, par exemple conformément à la figure unique. Le profil de la distribution d'erbium ρ est défini par sa largeur à mi-hauteur r égale au cinquième du rayon du coeur R de la fibre. La position centrale de la zone dopée coïncide avec le maximum d'énergie du mode fondamental de la pompe.

La fibre n° 2 a une distribution uniforme d'erbium dans son coeur.

Le tableau I ci-dessous donne des résultats pour ces deux fibres correspondant à une puissance de pompe de 5 mW à 1,476 µm avec un signal incident de 0,1 µW à 1,532 µm.

**Tableau I**

| | | |
|---|---|---|
| | Fibre n° 1 | Fibre n° 2 |
| L (m) | 24 | 22 |
| Δn | 30x10⁻³ | 30x10⁻³ |
| R (µm) | 1,5 | 1,5 |
| wo (µm) | 2,1 | 2,1 |
| G (dB) | 27,4 | 22,6 |
| g (dB/mW) | 5,5 | 4,5 |

On obtient avec la fibre n° 1 un coefficient de gain g supérieur à 5 dB/mW.

Par rapport aux amplificateurs de l'art antérieur, un amplificateur selon l'invention présente, pour les faibles signaux incidents, un coefficient de gain nettement amélioré et, pour des signaux assez forts pour correspondre au régime de saturation d'amplification, un rendement global du processus d'amplification très amélioré.

Des amplificateurs conçus suivant la présente invention pourraient par exemple travailler à faible puissance de saturation avec des gains importants, ce qui est intéressant pour un amplificateur inséré dans une ligne de transmission.

L'amélioration des performances d'un amplificateur selon l'invention apparaît donc quel que soit son régime de fonctionnement avec :
- un pompage dans les domaines spectraux de 0,98 ± 0,04 µm et 1,48 µm ± 0,04 µm,
- des signaux incidents sur la fibre faibles ou forts à des longueurs d'onde comprises dans le domaine spectral 1,5 µm-1,6 µm,
- une position quelconque de l'amplificateur sur la ligne de transmission.

Une fibre selon l'invention peut être réalisée par exemple à partir d'une préforme obtenue conformément à l'enseignement du brevet français BF 2 621 909.

Bien entendu l'invention n'est pas limitée aux exemples décrits, notamment en ce qui concerne la courbe de répartition radiale de l'erbium dans la fibre, les valeurs du rayon de coeur et de l'écart d'indice Δn.

## Revendications

1. Amplificateur optique à fibre dopée à l'erbium destiné à amplifier des signaux de longueur d'onde comprise entre 1,5 µm et 1,6 µm, et associé à une pompe optique, caractérisé par le fait que :
- ladite fibre présente un rayon de mode inférieur ou égal à 2,7 µm à la longueur d'onde de 1,55 µm,
- l'écart d'indice Δn entre le coeur et la gaine de la fibre est compris entre 25x10⁻³ et 35x10⁻³,
- l'erbium est localisé dans le coeur de ladite fibre de façon que sa distribution radiale soit centrée sur l'axe de révolution de cette fibre avec une largeur à mi-hauteur de ladite distribution inférieure au tiers du rayon de coeur,
- la longueur d'onde de pompe est située dans les domaines spectraux de 0,98 ± 0,04 µm ou de 1,48 ± 0,04 µm,
- le coefficient de gain g, égal au rapport entre le gain net G (mesuré en dB) et la puissance de pompe (mesurée en mW), est supérieur à 5 dB/mW.

2. Amplificateur optique à fibre dopée à l'erbium selon la revendication 1, caractérisé par le fait que le rayon du coeur de ladite fibre est compris entre 1,2 µm et 1,6 µm.

3. Amplificateur optique à fibre dopée à l'erbium selon la revendication 2, caractérisé par le fait que ledit rayon de coeur est égal à 1,5 µm et ledit écart d'indice Δn est égal à 30x10⁻³.

## Patentansprüche

1. Optischer Verstärker mit einer mit Erbium dotierten Faser, der Signale einer Wellenlänge verstärken soll, die zwischen 1,5 µm und 1,6 µm liegt, und der einer optischen Pumpe zugeordnet ist, dadurch gekennzeichnet, daß
- die Faser einen Modus-Radius von höchstens 2,7 µm bei einer Wellenlänge von 1,55 µm aufweist,
- der Abstand Δn der Brechungsindices zwischen dem Kern und der Hülle der Faser zwischen 25 · 10⁻³ und 35 · 10⁻³ liegt,
- das Erbium sich im Kern der Faser befindet, derart, daß seine radiale Verteilung auf die Achse dieser Faser zentriert ist, wobei die Hälfte des Erbiums auf einem Drittel des Radius des Kerns konzentriert ist,
- die Pump-Wellenlänge sich in den Spektralbereichen von 0,98 ± 0,04 µm oder 1,48 ± 0,04 µm befindet,
- der Verstärkungskoeffizient g gleich dem Verhältnis zwischen dem Nettogewinn G (gemessen in dB) und der Pumpleistung (gemessen in mW) höher als 5 dB/mW ist.

2. Optischer Verstärker mit einer mit Erbium dotierten Lichtleitfaser nach Anspruch 1, dadurch gekennzeichnet, daß der Radius des Kerns dieser Faser zwischen 1,2 µm und 1,6 µm liegt.

3. Optischer Verstärker mit einer mit Erbium dotierten Lichtleitfaser nach Anspruch 2, dadurch gekennzeichnet, daß der Radius des Kerns 1,5 µm beträgt und der Abstand Δn der Brechungsindices gleich 30 · 10⁻³ ist.

## Claims

1. An erbium-doped fiber optical amplifier designed to amplify signals of wavelengths lying in the range 1·5 µm to 1·6 µm, and associated with an optical pump, characterized in that:
said fiber has a mode radius which is not greater than 2·7 µm at a wavelength of 1·55 µm;
the index difference Δn between the core and the cladding of the fiber lies in the range 25 × 10⁻³ to 35 × 10⁻³;
the erbium is located in the core of said fiber so that the radial distribution of the erbium is centered on the axis of symmetry of the fiber with a half-height width of said distribution being less than one-third of the core radius;
the pump wavelength is situated in the following regions of the spectrum: 0·98 µm ± 0·4 µm or 1·48 µm ± 0·4 µm; and
the gain coefficient g, equal to the ratio between the net gain G (measured in dB) and the pump power (measured in mW), is greater than 5 dB/mW.

2. An erbium-doped fiber optical amplifier according to claim 1, characterized in that the core radius of said fiber lies in the range 1·2 µm to 1·6 µm.

3. An erbium-doped fiber optical amplifier according to claim 2, characterized in that said core radius is equal to 1·5 µm and said index difference Δn is equal to 30 × 10⁻³.
